# EUROPEAN PATENT APPLICATION

(11) **EP 4 174 347 A1**
(43) Date of publication of application: **03.05.2023**
(21) Application number: 22203092.6
(22) Date of filing: 21.10.2022
(51) Int. Cl.: F16K 5/06, F16K 31/04

(54) **BALL VALVE SYSTEM WITH BALL MOUNTED SEAL**

(30) Priority: 27.10.2021 US 202117511904
(71) Applicant: Hamilton Sundstrand Corporation, Charlotte, NC 28217-4578 (US)
(72) Inventor: CORETTO, August M., Windsor, CT, 06095 (US); SIMPSON, Scott W., Feeding Hills, MA, 01030 (US)
(74) Representative: Dehns

(57) **Abstract**

A ball valve includes a housing and has an inlet port, an outlet port and a central ball chamber. A ball member is received within the ball chamber and has a shaft connected to a motor such that the ball member can be rotated. The ball member is movable between a closed position at which it blocks fluid connection between the inlet port and the outlet port and to an open position at which a central passage in the ball member communicates the inlet port to the outlet port. A seal is mounted for movement with the ball member to provide a seal against the housing. A ball valve system is also disclosed.

## Description

### TECHNICAL FIELD

This application relates to ball valve systems having a seal mounted to the ball valve.

### BACKGROUND OF THE INVENTION

Valves are utilized in any number of applications to control the flow of a fluid. One known type of valve is a so called ball valve. In a ball valve, a generally spherical ball member has a passage through a central portion. The ball is mounted in a housing having a fluid inlet and a fluid outlet. The ball can turn about an axis such that the passage is either aligned between the inlet and outlet and fluid can flow, or to a location where the ball body blocks the inlet from connecting to the outlet.

Seals are known in ball valve systems. The seals have typically been mounted in the housing surrounding the ball member, and have been generally complex and large.

### SUMMARY OF THE INVENTION

According to an aspect of the invention, a ball valve is provided. The ball valve includes a housing and has an inlet port, an outlet port and a central ball chamber. A ball member is received within the ball chamber and has a shaft connected to a motor such that the ball member can be rotated. The ball member is movable between a closed position at which it blocks fluid connection between the inlet port and the outlet port and to an open position at which a central passage in the ball member communicates the inlet port to the outlet port. A seal is mounted for movement with the ball member to provide a seal against the housing.

According to an aspect of the invention, a ball valve system is also disclosed.

These and other features of the present invention can be best understood from the following specification and drawings, the following of which is a brief description.

### BRIEF DESCRIPTION OF THE DRAWINGS

Figure 1A shows a ball valve system in a closed position.
Figure 1B shows a detail of the Figure 1A ball.
Figure 2 shows the ball valve system in an open or fluid flow position.

### DETAILED DESCRIPTION

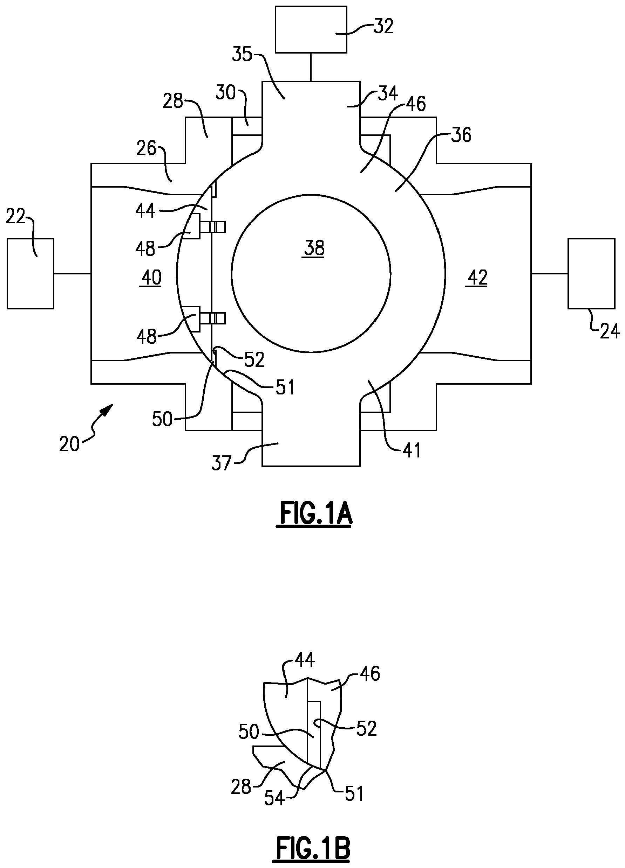

Ball valve system 20 connects a source of fluid 22 to a use of the fluid 24. A housing 26 includes a first portion 28 which is connected to a second portion 30. A control and motor 32 can rotate a ball member 34. The ball valve body 34 is made up of shaft members 35 and 37, ball member 36, and end cap 44. The ball member 36 may be generally spherical. The ball member 36 is received in a spherical ball chamber 41 in housing 26. The ball member 36 is shown in the Figure 1A position blocking flow between an inlet port 40 receiving fluid from the source of fluid 22 from reaching an outlet port 42 to communicate that fluid to the use 24. A central passage 38 is shown through the ball member 36, but does not connect inlet port 40 to outlet port 42 in this position. As is known, a ball member 36 may be generally spherical, although it need not be exactly spherical.

An end cap 44 of the ball valve body 34 is connected to a main ball 46. Bolts 48 connect the two. A seal 50 seals against housing 26 on the inlet side.

A seal 50 is shown in greater detail in Figure IB. Seal 50 is received within a notch 52 that extends 360 degrees about the valve body 46. The ditch could be formed in the cap 44 rather than in this location. The housing portion 28 is shown to have an inner contour 51 upon which the seal 50 seals. As can be seen, the seal 50 has a taper 54 at an outer surface to provide a good seal.

In the illustrated embodiment, the ball member 36 is formed as a single part with the shafts 35 and 37. However, it should be understood that the shafts can be formed as separate components and attached to the ball member 36. In addition, this disclosure would provide benefits into ball valve systems wherein the ball member has only a single shaft.

In one embodiment the seal 50 may be a metallic seal ring. Of course, other materials may be utilized.

In the Figure 1A position, the ball member 36 blocks flow between the inlet 40 and the outlet 42.

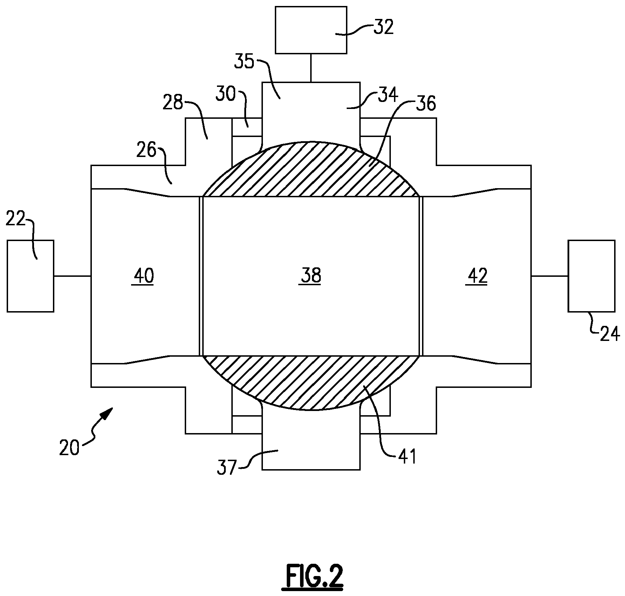

When it is desired to allow fluid flow, the control/motor 32 rotates the ball member 34 into and out of the plane of Figure 1A and to the Figure 2 position. Generally the ball member 34 is rotated 90 degrees. Now the passage 38 is aligned with the inlet port 40 and the outlet port 42 and fluid can flow. In one application, the source of fluid 22 may be a compressor of a gas turbine engine, and the use 24 may be a dump to atmosphere, an anti-icing system, or other use of hot air. As one example, air management systems for interior climate control could also utilize such a ball valve system.

With the prior art seals mounted in a housing there is more wear on the seal as the seal is contacted across its entire surface during the full movement of the ball member from the Figure 1A to the Figure 2 position. However, the seal in this disclosure is at least partially out of contact with a housing during a good portion of the movement. This will reduce wear on the seal member and increase its life.

A ball valve under this disclosure could be said to include a housing that has an inlet port, an outlet port and a central ball chamber. A ball member is received within the ball chamber and has a shaft connected to a motor such that the ball member can be rotated. The ball member is movable between a closed position at which it blocks fluid connection between the inlet port and the outlet port and to an open position at which a central passage in the ball member communicates the inlet port to the outlet port. A seal is mounted for movement with the ball member to provide a seal against the housing.

A ball valve under this disclosure could also be said to include a housing that has an inlet port, an outlet port and a central ball chamber. Ball member means are received within the ball chamber and have a shaft connected to a driving means such that ball member means can be rotated. The ball member means are movable to a closed position at which it blocks fluid connection between the inlet port and the outlet and to an open position at which a central passage in the ball member communicates the inlet port to the outlet port.

Seal means are mounted for movement with the ball member means to provide a seal against the housing.

The seal means may be a seal ring.

The seal ring may be a metallic seal ring.

Ball valves as described above may be used in a ball valve system having a source of fluid connected to the inlet port and a use for fluid connected to the outlet port.

Although embodiments of this disclosure have been shown, a worker of ordinary skill in this art would recognize that modifications would come within the scope of this disclosure. For that reason, the following claims should be studied to determine the true scope and content of this disclosure.

## Claims

1. A ball valve comprising:
a housing, having an inlet port, an outlet port and a central ball chamber;
a ball member received within the ball chamber and having a shaft connected to a motor such that the ball member can be rotated, the ball member being movable between a closed position at which it blocks fluid connection between the inlet port and the outlet port and to an open position at which a central passage in the ball member communicates the inlet port to the outlet port; and
a seal mounted for movement with the ball member to provide a seal against the housing.

2. The ball valve as set forth in claim 1, wherein an end cap is formed at one side of the ball member and the seal is mounted between the end cap and a main ball body.

3. The ball valve as set forth in claim 2, wherein the end cap is bolted to the main valve body.

4. The ball valve as set forth in claim 2 or 3, wherein a ditch is formed in one of the main valve body and the end cap to receive the seal.

5. The ball valve as set forth in any of claims 2 to 4, wherein when in the closed position the end cap faces the inlet port, such that the seal can seal on the housing.

6. The ball valve as set forth in any preceding claim, wherein the housing is formed of at least two pieces connected together.

7. The ball valve as set forth in any preceding claim, wherein the seal has a chamfered radially outer surface sealing against a surface of the housing.

8. The ball valve as set forth in any preceding claim, wherein the seal is a metallic seal ring.

9. A ball valve system comprising:
a source of fluid connected to a ball valve inlet port, and a use for fluid from the source of fluid connected to a ball valve outlet port; and
a ball valve including a housing, having an inlet port, an outlet port and a central ball chamber, a ball member received within the ball chamber and having a shaft connected to a motor such that the ball member can be rotated, the ball member being movable between a closed position at which it blocks fluid connection between the inlet port and the outlet port and to an open position at which a central passage in the ball member communicates the inlet port to the outlet port, a seal mounted for movement with the ball member to provide a seal against the housing.

10. The ball valve system as set forth in claim 9, wherein an end cap is formed at one side of the ball member and the seal is mounted between the end cap and a main ball body,
wherein optionally, the end cap is bolted to the main valve body.

11. The ball valve system as set forth in claim 10, wherein a ditch is formed in one of the main valve body and the end cap to receive the seal, and/or
wherein when in the closed position the end cap faces the inlet port, such that the seal can seal on the housing.

12. The ball valve system as set forth in any of claims 9 to 11, wherein the housing is formed of at least two pieces connected together, and/or
wherein the seal has a chamfered radially outer surface sealing against a surface of the housing, and/or
wherein the seal is a metallic seal ring.

13. The ball valve system as set forth in any of claims 9 to 12, wherein the source of the fluid is compressor in an associated gas turbine engine.

14. A ball valve comprising:
a housing having an inlet port, an outlet port and a central ball chamber;
ball member means received within the ball chamber and having a shaft connected to a driving means such that ball member means can be rotated, the ball member means being movable to a closed position at which it blocks fluid connection between the inlet port and the outlet and to an open position at which a central passage in the ball member communicates the inlet port to the outlet port; and
seal means mounting for movement with the ball member to provide a seal against the housing.

15. The ball valve as set forth in claim 14, wherein the ball member means is a generally spherical valve body, and/or
wherein the seal means is a metallic seal ring.
